# EUROPÄISCHE PATENTSCHRIFT

(11) **EP 2 511 202 B1**
(45) Veröffentlichungstag und Bekanntmachung des Hinweises auf die Patenterteilung: **15.08.2018**
(21) Anmeldenummer: 12163700.3
(22) Anmeldetag: 11.04.2012
(51) Int. Cl.: B65G 27/06, B23P 19/04, B23P 21/00

(54) **Fertigungs- und/oder Montagevorrichtung, insbesondere Blisterbefüllvorrichtung**
Production and/or assembly device, in particular blister filling device
Dispositif de fabrication et/ou de montage, en particulier dispositif de remplissage de blisters

(30) Priorität: 13.04.2011 DE 102011016902
(43) Veröffentlichungstag der Anmeldung: 17.10.2012
(73) Patentinhaber: Afag Holding AG, 6052 Hergiswil (CH); CPS Programmier-Service GmbH, 31698 Lindhorst (DE)
(72) Erfinder: Grundschok, Thomas, 30974 Wennigsen (DE); Walter, Stephan, 92253 Schnaittenbach (DE); Thürnau, Bernd, 31698 Lindhorst (DE)
(74) Vertreter: Blaumeier, Jörg

(56) Entgegenhaltungen:
- WO-A1-98/58764
- WO-A1-2004/052588
- AT-B- 392 250
- DE-A1- 3 644 943
- DE-A1- 4 334 373
- DE-A1- 10 051 435
- DE-A1- 19 548 431
- DE-A1- 19 844 797
- DE-A1-102008 060 126
- DE-C1- 3 831 676
- DE-C1- 3 832 845
- US-A1- 2003 070 285
- US-B1- 6 318 542

## Beschreibung

Die Erfindung betrifft eine Fertigungs- und/oder Montagevorrichtung, insbesondere Blisterbefüllvorrichtung, umfassend wenigstens eine an einem Vorrichtungsgestell angeordnete und bei Bedarf austauschbare Zuführeinrichtung für zu verarbeitende Bauteile, die mittels der Zuführeinrichtung vereinzelt in den Arbeitsbereich eines Arbeitsmoduls bringbar sind, wobei die Zuführeinrichtung auf einer Trägerplatte angeordnet ist, wobei am Vorrichtungsgestell eine Montageplatte vorgesehen ist, auf der die Trägerplatte in der Montageendposition aufsitzt.

Fertigungs- und/oder Montagevorrichtungen kommen in vielen Bereichen, in denen Gegenstände herzustellen, zusammen zu bauen oder miteinander zu verbinden sind, zum Einsatz. Ein hierauf jedoch keinesfalls beschränkendes Beispiel ist eine Blisterbefüllvorrichtung, in der unterschiedlichste Teile in Blistergurte abgelegt und verpackt werden. Zur lagerichtigen Einbringung der Teile in den Blistergurt werden Zuführeinrichtungen verwendet, basierend auf Vibrationsförderern, mittels welchen Vibrationsförderern die einzelnen Teile längs einer Förderstrecke in definierter Position zu einer definierten Übergabeposition, an welcher sie über ein geeignetes Arbeitsmodul gegriffen und in den Blistergurt gebracht werden, transportiert werden. Solche Zuführeinrichtungen kommen überall dort zum Einsatz, wo zu verarbeitende Einzelteile an eine definierte Position gebracht werden müssen, um dort gegriffen und an einem anderen Bauteil an- oder eingebaut zu werden.

Um im Falle einer Produktänderung, wenn also beispielsweise ein anderes Teil zusammengesetzt oder im Blistergurt oder Ähnliches eingebracht werden soll, ist es mitunter erforderlich, die Zuführeinrichtungen im Falle eines solchen Produktwechsels auszutauschen. Dieser Austausch gestaltet sich jedoch in der Regel sehr zeitaufwändig und kompliziert, da die Zuführeinrichtung, die wie beschrieben in der Regel einen Vibrationsförderer mit entsprechenden Peripheriebauteilen umfasst, mehrteilig ist und infolgedessen die Demontage umständlich ist, entsprechend natürlich auch die Montage der neuen Zuführeinrichtung. Damit einher geht auch eine aufwändige Justierung, denn die neue Zuführeinrichtung muss ja exakt ausgerichtet werden, damit sichergestellt ist, dass die heranzufördernden Bauteile auch in genau der Übergabeposition positioniert werden können, in der sie vom nachgeschalteten Arbeitsmodul gegriffen werden können.

Die Druckschrift AT 392 250 B offenbart eine Vibrationsfördereinrichtung zum Vereinzeln und Ausrichten von Montageteilen. Auf einer Grundplatte ist ein Vibrationsantrieb angeordnet, der eine Tragplatte antreibt. Diese weist mehrere Förderbahnen auf, die wahlweise dem Auslauf eines Vorratsbehälters nachgeschaltet werden. Die Tragplatte ist auf bzw. gegenüber der Grundplatte verstellbar.

Eine Fertigungs- und/oder Montagevorrichtung zum Fertigen und/oder Montieren eines Werkstücks ist aus der Druckschrift DE 198 44 797 A1 bekannt. An einem Vorrichtungsgestell sind Arbeitsmodule und Zubringeinrichtungen lösbar befestigt.

Eine Vorrichtung zum linearen Bewegen eines Maschinenteils, Werkzeugs oder Werkstücks mit einem Schlitten auf einer Laufleiste ist aus der Druckschrift DE 43 34 373 A1 bekannt. Der Schlitten weist nach unten zumindest geringfügig hervorstehende Räder, Rollen oder Walzen auf, so dass der Schlitten auf der Laufleiste rollbar ist. Die Laufleiste weist mindestens eine Parkstation auf, in der die Räder, Rollen oder Walzen absenkbar sind, so dass der Schlitten auf der Laufleiste aufliegt.

Der Erfindung liegt damit das Problem zugrunde, eine Fertigungs- und/oder Montagevorrichtung anzugeben, die einen schnellen und einfachen Austausch einer Zuführeinrichtung bei gleichzeitig einfacher Justierung der Zuführeinrichtung ermöglicht.

Die Aufgabe wird erfindungsgemäß durch eine Fertigungs- und/oder Montagevorrichtung gemäß Anspruch 1 gelöst.

Bei der erfindungsgemäßen Vorrichtung ist die Zuführeinrichtung auf einer eigenen Trägerplatte aufgebaut, das heißt, dass sämtliche die Zuführeinrichtung bildenden Komponenten auf dieser einen Trägerplatte montiert sind. Die Fertigungs- und/oder Montagevorrichtung weist ferner eine am Vorrichtungsgestell vorgesehene Montageplatte auf, auf der die Trägerplatte der Zuführeinrichtung zur Montage derselben aufgesetzt wird. An der Trägerplatte und/oder der Montageplatte sind geeignete Führungs- und/oder Positioniermittel vorgesehen, das heißt, dass die Trägerplatte und die Montageplatte über diese Führungs- und/oder Positioniermittel zusammenwirken, und zwar derart, dass die zu montierende Zuführeinrichtung allein durch Verschieben der Trägerplatte auf der Montageplatte aufgrund der Interaktion der Führungs- und/oder Positioniermittel in die definierte Montageendposition bringbar ist. Das heißt, dass im Montagefall der Bediener die neue Zuführeinrichtung mit ihrer Trägerplatte lediglich auf die Montageplatte setzen muss, wonach er sie lediglich horizontal verschieben muss, während welcher Horizontalverschiebung durch Interaktion der Führungs- und/oder Positioniermittel zwischen den beiden Platten automatisch die Zuführeinrichtung in die Montageendposition gebracht wird. In dieser definierten Montageendposition ist die Zuführeinrichtung endgültig und eindeutig so positioniert, dass sie, gegebenenfalls nach einer Positionsfixierung, absolut exakt bezüglich der Übergabeposition der über sie zu fördernden Teile angeordnet ist, weitere aufwändige Justiermaßnahmen können üblicherweise entfallen.

Die erfindungsgemäße Förder- und/oder Montagevorrichtung lässt folglich einen sehr einfachen und schnellen Umbau zu, da zum Umrüsten lediglich die nicht mehr benötigte Zuführeinrichtung, die gleichermaßen über eine Trägerplatte verfügt, auf der sämtliche Zuführkomponenten aufgebaut sind, durch horizontales Abziehen von der Montageplatte entfernt werden kann. Gleichermaßen einfach gestaltet sich das Aufrüsten der neuen Zuführeinrichtung durch einfaches Aufsetzen der Trägerplatte und geführtes und positionsgenaues Schieben in die Montageendposition. Die Vorrichtung selbst ist damit in kürzester Zeit wieder einsatzbereit. Auch besteht die Möglichkeit, bereits vor der Umrüstung die entsprechenden Montage- und Justiervorgänge an der Zuführeinrichtung selbst vorzunehmen, nachdem sämtliche Komponenten ja auf der Trägerplatte aufgebaut sind und bekannt ist, in welcher Endposition sich die Trägerplatte dann am Vorrichtungsgestell befindet. Das heißt, dass auch diese Arbeiten quasi entkoppelt zum Umrüstvorgang vorgenommen werden können, mithin also während der Umrüstung nicht anfallen.

Hinsichtlich der Ausgestaltung der Führungs- und/oder Positioniermittel sind unterschiedliche Ausgestaltungen denkbar. In einer Weiterbildung der Führungs- und/oder Montagevorrichtung nach Anspruch 1 kann vorgesehen sein, dass die Führungs- und/oder Positioniermittel zusätzlich wenigstens eine an der Montageplatte vorgesehene Führungsleiste und eine an der Trägerplatte vorgesehene Führungsnut, in die beim Verschieben die Führungsleiste eingreift, oder umgekehrt, umfassen. Die Führungsleiste und die Führungsnut sind formkomplementär, das heißt, ihre Formen entsprechen sich, so dass ein quasi formschlüssiger Eingriff der Leiste in die Nut gegeben ist, zumindest was die horizontale Ausrichtung angeht. Die Führungsleiste wie auch die Führungsnut können beispielsweise rechteckig sein oder eine V-Form besitzen und Ähnliches. Die konkrete Formgebung ist in jedem Fall immer so zu wählen, dass eine Formpassung mit vernachlässigbarem Horizontalspiel gegeben ist.

In einer Weiterbildung der Führungs- und/oder Montagevorrichtung gemäß Anspruch 1 oder 2 kann vorgesehen sein, dass die Führungs- und/oder Positioniermittel zusätzlich wenigstens eine an der Montageplatte oder der Trägerplatte angeordnete Gleitschiene, auf denen die jeweils andere Platte gleitet, umfassen. Eine solche Gleitschiene ermöglicht ein einfaches Schieben der Zuführeinrichtung, die doch ein beachtliches Gewicht besitzt. Eine solche Gleitschiene besteht bevorzugt aus einem geeigneten Gleitwerkstoff, beispielsweise einem Kunststoff wie PTFE. Denkbar ist aber auch eine Metallschiene beispielsweise aus Messing, die ebenfalls gute Gleiteigenschaften besitzt.

Eine besonders zweckmäßige Weiterbildung der Führungs- und Montageeinrichtung gemäß Anspruch 2 und 3 sieht vor, dass die Führungsleiste oder die Führungsnut plattenmittig und die Gleitschienen, vorzugsweise jeweils zwei, an beiden Seiten davon an der Montageplatte oder der Trägerplatte angeordnet sind. Gemäß dieser Erfindungsausgestaltung ist ein spiegelbildlicher Aufbau gegeben. Dieser spiegelbildliche Aufbau ermöglicht es, die Trägerplatte entweder auf die rechte Hälfte oder die linke Hälfte der Montageplatte aufzusetzen, je nachdem, wie der konkrete Aufbau der Zuführeinrichtung auf der Trägerplatte aussieht respektive wo sich gegebenenfalls für die konkrete Arbeitsaufgabe die Übergabeposition befindet. Die Führungsleiste oder die Führungsnut befindet sich mittig an der Montageplatte, während die Gleitschienen seitlich davon angeordnet sind. Entsprechend befinden sich an der Trägerplattenunterseite randseitig jeweils eine komplementäre Führungsnut oder Führungsleiste, je nachdem, wie die Ausgestaltung der Montageplatte ist, von denen jeweils eine je nach Anordnungsposition der Trägerplatte mit der montageplattenseitigen Führungsleiste/Führungsnut zusammenwirkt.

Erfindungsgemäß sind die Führungs- und/oder Positioniermittel an der Montageplatte angeordnete Rollen, die in Laufnuten oder auf Laufschienen an der Trägerplatte laufen, oder umgekehrt. Anstelle von Führungsschiene/Führungsnut sind hier Rollen und Laufschienen oder Laufnuten vorgesehen, die führend und positionierend zusammenwirken. Die Rollen können entweder an der Montageplatte oder an der Trägerplatte, jeweils ober- respektive unterseitig, vorgesehen sein, an der jeweils gegenüberliegenden Platte befinden sich die Laufnuten oder Laufschienen. Die Rollen können beispielsweise umfangsmäßig profiliert sein, wie auch die Schienen. Beispielsweise können die Rollen eine eingetiefte V-Nut aufweisen, während die Schienen eine entsprechende geformte Laufkante aufweisen und Ähnliches. Denkbar ist es, nur eine Rollenreihe und eine Laufnut/Laufschiene vorzusehen, und zusätzlich eine Gleitschiene, die der andersseitigen Lagerung der Trägerplatte dient, vorzusehen, während die Gleitschiene an der Montageplatte oder der Trägerplatte angeordnet sein kann. Auch hier besteht wiederum die Möglichkeit eines spiegelbildlichen Aufbaus, in dem die Rollen oder die Laufschiene/Laufnut mittig an der Montageplatte und die Gleitschienen, vorzugsweise jeweils zwei davon, an beiden Seiten davon angeordnet sind. Auch diese Ausgestaltung, die wiederum nur eine Rollenreihe plattenmittig vorsieht, oder nur eine plattenmittige Laufschiene oder Laufnut, ermöglicht so das wahlweise Aufsetzen auf die rechte oder linke Hälfte der Montageplatte, je nach Arbeitsaufgabe. Grundsätzlich wäre es auch denkbar, montageplattenseitig beispielsweise drei Laufschienen/Laufnuten vorzusehen und trägerplattenseitig an den Rändern zwei Rollenreihen, die auf jeweils zwei Laufschienen/Laufnuten aufsitzen und ebenfalls einen spiegelbildlichen und damit wechselseitig möglichen Aufbau zulassen.

Eine zweckmäßige Weiterbildung der Erfindungsausgestaltung umfassend die Rollen sieht vor, für eine Vertikalbewegung der Trägerplatte relativ zur Montageplatte die Rollen anhebbar und absenkbar auszuführen. Dies ermöglicht es, die Trägerplatte axial gesehen in die Montageendstellung zu bewegen und dann durch Vertikalbewegung der Rollen fest aufliegend auf die Montageplatte abzusetzen.. Eine Alternative zur vertikalen Verstellbarkeit der Rollen sieht vor, die Laufnuten oder Laufschienen ansteigend oder abfallend zu führen. Bei dieser Ausgestaltung laufen die vertikal nicht beweglichen Rollen bis kurz vor Erreichen der Endstellung auf oder in den Laufnuten/Laufschienen. Diese fallen erst kurz vor Erreichen der Montageendstellung vertikal gesehen ab oder steigen an, je nach Ausgestaltung. Die Rollen folgen der Nut-/Schienenführung, so dass hieraus zwangsläufig auch eine Vertikalbewegung der Zuführeinrichtung erfolgt. In der Montageendstellung liegt wiederum die Trägerplatte auf der Montageplatte auf. Bei dieser Erfindungsausgestaltung kommen folglich keine Rollenreihen zum Einsatz, sondern lediglich beispielsweise vier an der Trägerplattenunterseite angeordnete Rollen. Die Trägerplatte "taucht" also beim Einschieben in die Montageendstellung automatisch ab.

Um neben der Führung/Positionierung über die zusammenwirkenden Führungsschiene/Führungsnut bzw. Rollen/Laufnuten/Laufschienen eine weitere exakte Ausrichtmöglichkeit zu realisieren, sieht eine zweckmäßige Weiterbildung der Erfindung vor, dass die Führungs- und/oder Positioniermittel wenigstens eine an der Trägerplatte vorgesehene Zentrierungsaufnahme und wenigstens ein am Vorrichtungsgestell vorgesehenes Zentrierungsteil, das kurz vor Erreichen der Montageendstellung in die Zentrierungsaufnahme eingreift, oder umgekehrt, umfassen. Diese Elemente dienen der exakten seitlichen Zentrierung, sofern eine solche noch nicht zu 100 % über das Zusammenwirken der Schienen/Rollen/Nuten gegeben ist. An einer Platte befindet sich eine Zentrierungsaufnahme, an der anderen ein entsprechendes Zentrierungsteil, das kurz vor Erreichen der Montageendstellung in die Zentrierungsaufnahme eingreift und so eine laterale Zentrierungsausrichtung ermöglicht. Diese Zentrierung ist unabhängig davon, ob nun eine reine Horizontalbewegung oder auch eine zusätzliche Vertikalbewegung erfolgt, möglich und zweckmäßig.

Die Zentrierung kann beispielsweise derart realisiert sein, dass die Zentrierungsaufnahme eine an oder im Bereich der vorlaufenden Kante der Trägerplatte oder an der Montageplatte vorgesehene, vorzugsweise V-förmige Zentriernut ist, in die das Zentrierungsteil in Form eines Zapfens oder einer Passfeder beim Heranschieben oder Absenken eingreift. Der Zapfen oder die Passfeder wird also axial gesehen in die V-förmige Nut eingeschoben und mit Annäherung an den Nutgrund exakt geführt und zentriert. Dies ist sowohl beim Schieben als auch beim über die Rampenform der Laufnuten/Laufschienen erfolgenden Schieben verbunden mit der Absenkbewegung möglich. Kommen absenkbare Rollen oder Rollenreihen zum Einsatz, bei welcher Ausgestaltung also die Trägerplatte bis in die axiale Montageendstellung geschoben wird, so kann die Zentrierung auch über eine oder mehrere Bohrungen beispielsweise in der Montageplatte, in die an der Trägerplattenunterseite vorspringende Zapfen beim Absenken eingreifen, realisiert werden. Hier erfolgt also die Zentrierung durch eine reine vertikale Absenkbewegung.

Zur sicheren Fixierung der Zuführeinrichtung in der Montageendstellung ist zweckmäßigerweise am Vorrichtungsgestell wenigstens ein, vorzugsweise zwei, Spannmittel vorgesehen, die in der Montageendstellung an der Trägerplatte oder daran vorgesehenen Spannmitteln zum Verspannen der Trägerplatte z. B. gegen das Vorrichtungsgestell zusammenwirken, oder umgekehrt. Über diese Spannmittel, die bevorzugt als manuell zu betätigende Spannhebel oder alternativ auch als elektromotorisch zu betätigende Spanner ausgeführt sind, erfolgt eine sichere axiale Verspannung der Trägerplatte gegen das Vorrichtungsgestell oder die Montageplatte. Die Spannmittel können entweder an dem Vorrichtungsgestell oder die Montageplatte angeordnet sein, und mit geeigneten Koppelelementen an der Trägerplatte zusammenwirken, wie sie aber auch an der Trägerplatte vorgesehen sein können, während dann die Koppelelemente am Vorrichtungsgestell oder der Montageplatte vorgesehen sind. Diese Koppelelemente können beispielsweise als Vorsprung mit einer nutartigen Hinterschneidung ausgebildet sein, in die ein Bügel des Spannhebels eingreift. Im Falle einer elektromotorischen Ausgestaltung kann über dem Elektromotor beispielsweise ein Exzenter betätigt werden, der in eine entsprechende Bohrung eingreift und so die Axialverspannung realisiert und Ähnliches.

Eine gegebenenfalls zusätzliche Fixierungsmöglichkeit kann in Form mehrerer, vorzugsweise mindestens vier, an der Montageplatte vorgesehener Gewindebohrungen, die zur Aufnahme von der Fixierung der Trägerplatte dienenden Halteschrauben, die durch Durchbrechungen in der Trägerplatte greifen, realisiert werden. Hierüber wird also die Trägerplatte mit der Montageplatte zusätzlich vertikal verschraubt.

Weiterhin kann an der Zuführeinrichtung wenigstens ein Stecker vorgesehen sein, der in eine am Vorrichtungsgestell vorgesehene Buchse zur Erwirkung einer Verbindung elektrischer und/oder pneumatischer und/oder hydraulischer Versorgungs- oder Steuerleitungen vorgesehen ist. Hierüber ist eine einfache Anbindung der Zuführeinrichtung an sämtliche vorrichtungsgestellseitig vorgesehenen oder von dort zugeführten Betriebsmittel möglich, so dass durch einfaches Zusammenfügen der Steckverbindung sofort die Betriebsbereitschaft der Zuführeinrichtung gegeben ist.

Eine zweckmäßige Weiterbildung der Erfindung sieht vor, am Vorrichtungsgestell wenigstens einen Positionssensor zur Erfassung des Erreichens der Montageendposition der Trägerplatte anzuordnen, wobei der Betrieb der Zuführeinrichtung in Abhängigkeit der Sensorerfassung gesteuert wird. Über diesen Positionssensor wird das tatsächliche und definierte Erreichen der Montageendstellung erfasst. Nur dann, wenn dieses Erfassungsergebnis vorliegt, kann die Zuführeinrichtung überhaupt in Betrieb genommen werden. Der Positionssensor gibt ein entsprechendes Signal an die übergeordnete Steuerungseinrichtung, die dann den Betrieb steuert. Hierüber wird ein Höchstmaß an Sicherheit gewährleistet, da eben ein Betrieb nur bei exakter Positionierung der Zuführeinrichtung möglich ist, so dass Schäden für Mensch und Maschine, die aus einer unzureichenden Positionierung und einem trotzdem erfolgenden Betrieb resultieren würden, vorteilhaft vermieden werden.

Schließlich kann eine Einrichtung zur Erfassung einer die in der Montageendposition befindliche Zuführeinrichtung identifizierenden Kodierung vorgesehen sein, wobei nach erfolgter Identifizierung seitens einer den Betrieb der Zuführeinrichtung und/oder des Arbeitsmoduls steuernden Steuerungseinrichtung automatisch ein der identifizierten Zuführeinrichtung zugeordnetes Arbeitsprogramm abgearbeitet wird. In der übergeordneten Steuerungseinrichtung sind für unterschiedliche ankoppelbare Zuführeinrichtungen respektive deren Arbeitsmodule entsprechende Arbeitsprogramme hinterlegt. Wird mit Erreichen der Montageendstellung die entsprechende Identifikationskodierung der Zuführeinrichtung erfasst, so kann automatisch das ihr zugeordnete Arbeitsprogramm geladen und abgearbeitet werden, so dass ein aufwändiges separates Programmieren entfällt.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Perspektivansicht eines Teils einer Fertigungs- und/oder Montagevorrichtung,
- Fig. 2: eine Teilansicht der Vorrichtung aus Fig. 1 in einer Explosionsdarstellung,
- Fig. 3: eine Detailansicht der Vorrichtung aus Fig. 1 zur Darstellung eines Spannmittels,
- Fig. 4: eine vergrößerte Detailansicht im Bereich des Anschlags der Zuführeinrichtung am Vorrichtungsgestell nebst Positionssensor,
- Fig. 5: eine Aufsicht auf eine weitere Fertigungs- und/oder Montagevorrichtung mit Zentrierelementen,
- Fig. 6: eine Seitenansicht einer weiteren Ausführungsform einer erfindungsgemäßen Fertigungs- und/oder Montagevorrichtung mit Rollenführung,
- Fig. 7: eine Aufsicht auf die Montageplatte der Vorrichtung aus Fig. 6,
- Fig. 8: eine Teilschnittansicht durch den Bereich der montageplattenseitigen Führungsnut zu Beginn der Positionierung,
- Fig. 9: eine Ansicht entsprechend Fig. 8 am Ende der Positionierung, und
- Fig. 10: eine Seitenansicht einer weiteren Ausführungsform einer erfindungsgemäßen Fertigungs- und/oder Montagevorrichtung.

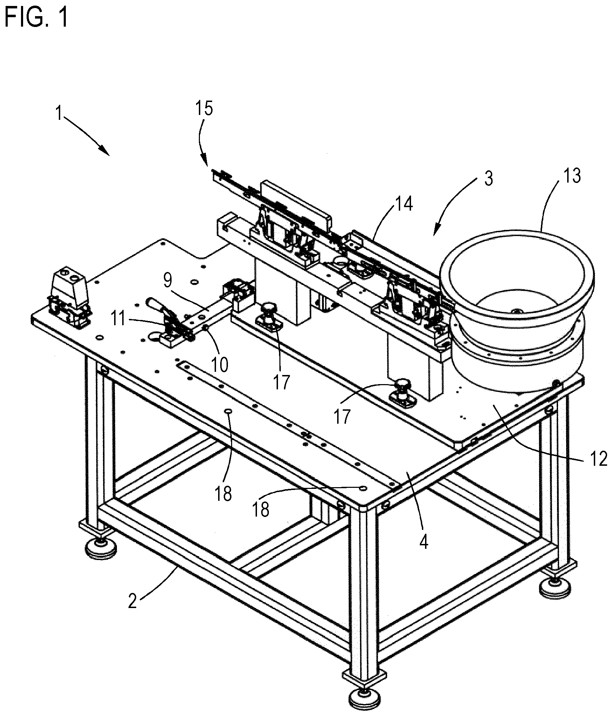

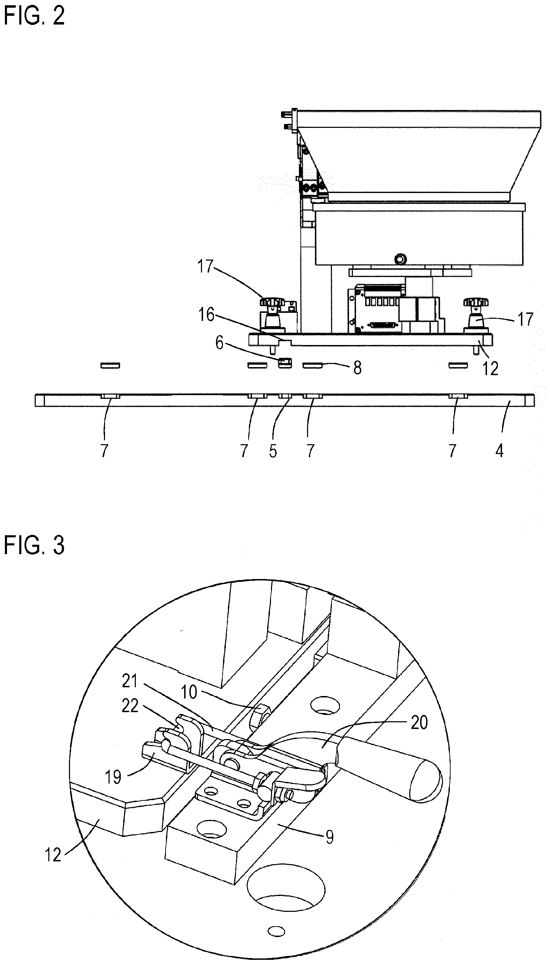

Fig. 1 zeigt eine Perspektivansicht einer Fertigungs- und/oder Montagevorrichtung 1, wobei hier nur der Bereich des Vorrichtungsgestells 2 der Vorrichtung 1 gezeigt ist, der der Aufnahme einer Zuführeinrichtung 3 dient. Das Vorrichtungsgestell 2 weist eine Montageplatte 4 auf, auf der die Zuführeinrichtung 3 aufgesetzt wird. Wie der Explosionsansicht gemäß Fig. 2 zu entnehmen ist, sind an der Montageplatte eine Reihe einzelner Nuten ausgebildet, die der Aufnahme unterschiedlicher Leisten oder Schienen dienen. Vorgesehen ist eine bezogen auf die Breite der Montageplatte 4 mittig positionierte Nut 5, in der eine Führungsleiste 6, die aus der Plattenebene in der Montagestellung vorspringt, aufgenommen ist. Links und rechts davon sind zwei weitere Nuten 7 vorgesehen, denen zum Rand hin entsprechende weitere Nuten 7 folgen. In diesen sind jeweils Gleitschienen 8 aus einem Gleitkunststoff oder einem entsprechende Gleiteigenschaften aufweisenden Metall aufgenommen. Die Führungsleiste 6 ist bevorzugt eine Metall-, vorzugsweise Stahlschiene.

An der Montageplatte 4 ist ferner eine Anschlagleiste 9 vorgesehen, an der wenigstens zwei, vorzugsweise mehrere über ihre Länge verteilte Anschläge 10 vorgesehen sind, an die die Zuführeinrichtung 3 herangeschoben wird. Ferner befinden sich an der Anschlagleiste 9 Spannmittel 11, die zum Verspannen der Zuführeinrichtung 3 gegen die Anschlagleiste 9 dienen, worauf nachfolgend noch eingegangen wird.

Wie den Figuren 1 und 2 zu entnehmen ist, ist ein spiegelbildlicher Aufbau der Montageplatte 4 gegeben, und zwar sowohl was die Anordnung der Nuten 5, 7 bzw. der Leisten oder Schienen 6, 8, als auch die Ausgestaltung der Anschlagleiste 9 angeht. Diese spiegelbildliche Ausgestaltung ermöglicht es, spiegelbildlich aufgebaute Zuführeinrichtungen 3 entsprechend zu positionieren, also entweder auf der rechten Hälfte oder auf der linken Hälfte der Montageplatte 4 aufzusetzen. Die Figuren 1 und 2 zeigen eine rechtsseitige Anordnung der Zuführeinrichtung 3, bei Anordnung auf der anderen Hälfte der Montageplatte wäre auch die Zuführeinrichtung 3 spiegelbildlich aufgebaut.

Die Zuführeinrichtung 3 selbst umfasst eine Trägerplatte 12, auf der die einzelnen Komponenten der Zuführeinrichtung 3, die der eigentlichen Teileförderung dienen, angeordnet sind. Lediglich exemplarisch sei ein Vibrationswendelförderer 13 und eine ihm nachgeschaltete Vibrationslinearförderstrecke 14 erwähnt, wobei im Vibrationswendelförderer 13 aufgenommene, zu vereinzelnde und verbauende Kleinteile aufgenommen sind, die vom Wendelförderer 13 auf den Linearförderer 14 gegeben werden, der diese sodann zu einer hier nicht näher gezeigten Übergabeposition 15 fördert, wo ein ebenfalls nicht näher gezeigtes Arbeitsmodul seinen Arbeitsbereich hat und die einzelnen angeförderten Teile übernimmt und verbaut. Das Arbeitsmodul selbst ist Teil der der Zuführeinrichtung nachgeschalteten Vorrichtungsperipherie, die je nach Art der Vorrichtung ausgebildet sein kann. Beispielsweise handelt es sich hierbei um eine Blisterbefüllvorrichtung, bei der entlang des Arbeitsbereichs 15 des Arbeitsmoduls ein zu befüllender Blistergurt gefördert wird, wobei das Arbeitsmodul die Einzelteile in die einzelnen Blisteraufnahmen ablegt und Ähnliches.

An der Unterseite der Trägerplatte 12 ist randseitig eine Führungsnut 16 vorgesehen, die, wenn die Trägerplatte 12 auf die Montageplatte 4 aufgesetzt ist, die Führungsleiste 6 übergreift, das heißt, die Führungsleiste 6 greift seitlich gesehen im Wesentlichen formschlüssig in die Führungsnut 16 ein, so dass die Trägerplatte 12 längs der Montageplatte 4 verschoben werden kann, dabei aber axial über den Eingriff der Führungsleiste 6 in die Führungsnut 16 geführt ist. Die Trägerplatte 12 liegt ferner mit ihrer Unterseite auf den Gleitschienen 8 auf, siehe Fig. 2, so dass ein einfaches Verschieben der gesamten Zuführeinrichtung 3 auf der Montageplatte 4 möglich ist. Die Führungsleiste 6 und die Führungsnut 16 bilden folglich ein Führungs- und/oder Positioniermittel, das dazu dient, durch eine einfache Verschiebebewegung der Zuführeinrichtung 3 auf der Montageplatte 4 diese in eine definierte Montageendstellung zu bringen, die dadurch definiert ist, dass die Zuführeinrichtung 3 dann mit der Trägerplatte 12 gegen die Anschläge 10 der Anschlagleiste 9 geschoben ist.

An der Trägerplatte 4 sind ferner mehrere, im gezeigten Beispiel vier, Halteschrauben 17 vorgesehen, die in entsprechenden Gewindebohrungen 18 der Montageplatte 4 eingeschraubt werden, wenn die Zuführeinrichtung 3 die in Fig. 1 gezeigten Montageendstellung erreicht hat. Dann liegen die Halteschrauben 17 exakt über den Gewindebohrungen 18, so dass die Halteschrauben 17 einfach eingeschraubt und die gesamte Zuführeinrichtung 3 fest fixiert werden kann.

Zur axialen Fixierung der Zuführeinrichtung 3, wenn sie zunächst an die Anschlagleiste 9 herangeschoben ist, dienen ferner die an der Anschlagleiste 9 vorgesehenen Spannmittel 11, von denen im gezeigten Beispiel zwei vorgesehen sind. Je nachdem, ob die Zuführeinrichtung 3 auf der linken oder rechten Montageplattenhälfte aufgesetzt wird, wirkt jeweils immer ein Spannmittel 11 mit einem entsprechenden Spannteil 19, das an der Trägerplatte 12 vorgesehen ist, zusammen. Wie Fig. 3 zeigt, ist ein Spannmittel 11 als schwenkbarer Spannhebel 20 ausgeführt, der einen Bügel 21 aufweist. Dieser wird zum Verspannen der herangeschobenen Trägerplatte 12, die gegen den Anschlag 10, der zu Justierzwecken gegebenenfalls in seinem Abstand zur Anschlagleiste 9 verstellt werden kann, über das Spannteil 19 gelegt, das nach Art einer Klaue ausgeführt ist. Wird nun der Spannhebel 20 nach unten die in Fig. 3 gezeigte Spannstellung gebracht, so wird automatisch der Spannbügel 21 axial bewegt und die Trägerplatte 12 fest gegen den Anschlag 10 gezogen. Selbstverständlich sind grundsätzlich auch andere Spannmöglichkeiten denkbar, wie natürlich auch in jeder Montagestellung der Zuführeinrichtung 3 auch zwei solcher Spannmittel 11 an der Trägerplatte 12 angreifen können.

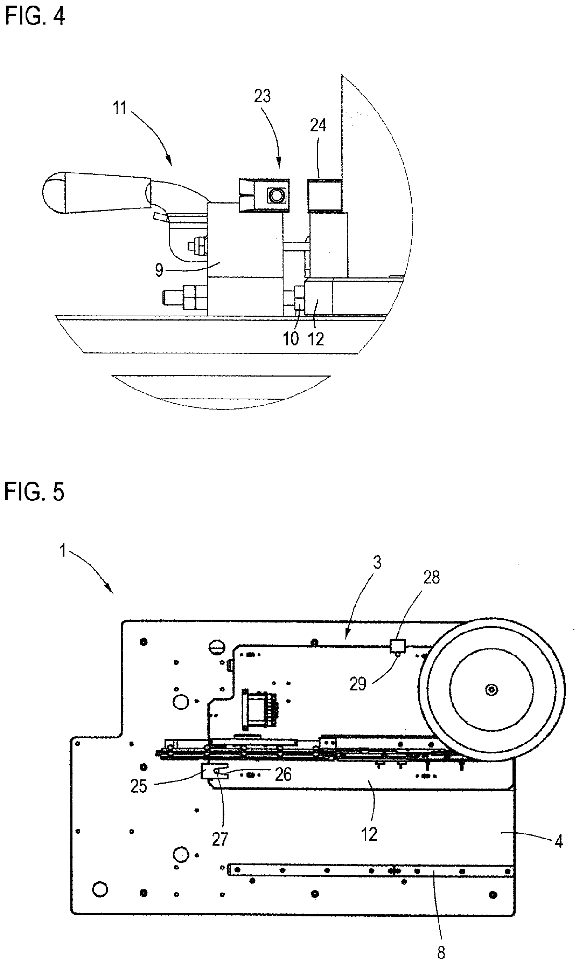

Fig. 4 zeigt in einer Detailansicht eine Sensoreinrichtung 23, die im gezeigten Beispiel an der Anschlagleiste 9 angeordnet ist. Diese dient als Positionssensor zum Erfassen eines entsprechenden Erfassungs- oder Sensorbauteils 24 oder eines entsprechenden Erfassungselements, das an der Trägerplatte 12 respektive der Zuführeinrichtung 3 vorgesehen ist. Die Erfassung erfolgt nur, wenn die komplette Zuführeinrichtung 3 absolut exakt die definierte Montageendstellung eingenommen hat. Über die Sensoreinrichtung 23 wird sodann, wenn die Erfassung erfolgt ist, ein entsprechendes Signal an eine übergeordnete Steuerungseinrichtung gegeben, die erst dann den Betrieb der Zuführeinrichtung 3 grundsätzlich freigibt. Verbunden mit der Positionserfassung kann auch gleichzeitig eine Erfassung einer die Zuführeinrichtung 3 identifizierende Kodierung sein, die ebenfalls übermittelt wird. Diese erfasste Kodierung kann dann seitens der übergeordneten Steuerungseinrichtung dahingehend verarbeitet werden, dass automatisch das entsprechende Arbeitsprogramm, gemäß dem die Zuführeinrichtung 3 individuell anzusteuern ist, eingeladen und abgearbeitet wird.

Fig. 5 zeigt eine weitere erfindungsgemäße Fertigungs- und/oder Montagevorrichtung 1 in einer Aufsicht, die vom Grundaufbau im Wesentlichen der aus den Figuren 1 - 4 bekannten Vorrichtung entspricht. Für gleiche Bauteile werden im Folgenden grundsätzlich gleiche Bezugszeichen verwendet.

Vorgesehen ist hier wiederum eine Montageplatte 4, auf der jedoch, anders als bei der Ausführung gemäß der Figuren 1 - 4, nur die Gleitschienen 8 vorgesehen sind. Eine separate Längsführung ist hier nicht gegeben, die Gleitschienen 8 stellen die einzigen Führungs- und/oder Positioniermittel in Schienenform an der Montageplatte 4 dar.

Jedoch sind bei dieser Ausgestaltung Zentriermittel vorgesehen, umfassend ein montageplattenseitig vorgesehenes Zentrierelement 25 mit einer sich öffnenden V-förmigen Zentrieraufnahme 26. In diese greift beim Heranschieben ein an der Trägerplatte 12 befindlicher Zentrierzapfen 27 ein. In der Montageendstellung liegt der Zentrierzapfen 27 im Grund der V-förmigen Zentrieraufnahme 26, das heißt, dass bezüglich der Axialposition relativ zur Montageplatte 4 die Zuführeinrichtung 3 positionsgenau angeordnet ist.

Um auch für eine seitliche positionsgenaue Ausrichtung zu sorgen, ist ferner ein weiteres Zentrierteil 28 an der Montageplatte 4 angeordnet, hier als Anschlagbock, unter den quasi die Trägerplatte 12 geschoben wird. Ein an der Trägerplatte vorspringender weiterer Zapfen 29 wird beim seitlichen Ausrichten der Zuführeinrichtung gegen das Zentrierteil 28 geschoben, so dass es auch seitlich exakt ausgerichtet ist. Damit ist die gesamte Zuführeinrichtung 3 in einer definierten Montageendstellung angeordnet, wiederum erreicht durch alleiniges Verschieben auf der Montageplatte 4.

Selbstverständlich können auch hier die Anschlagleiste 9 nebst der Spannmittel 11 vorgesehen sein, wobei der Anschlagleiste 9 keine eigentliche Anschlagfunktion mehr zukommt, da der axiale Anschlag über das Zentrierteil 25 realisiert ist.

In der Montageendstellung erfolgt wiederum die Fixierung über die hier nicht näher gezeigten Halteschrauben 17, die in die Gewindebohrungen 18 an der Montageplatte 4 eingreifen.

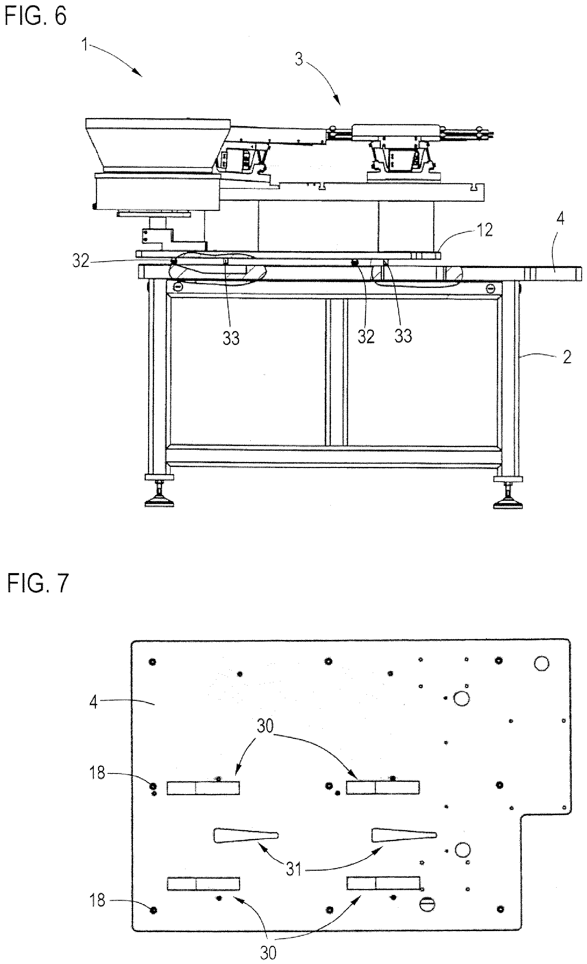

Fig. 6 zeigt in einer Seitenansicht eine weitere erfindungsgemäße Fertigungs- und/oder Montagevorrichtung 1, wiederum umfassend ein Vorrichtungsgestell 2 mit Montageplatte 4. Die Zuführeinrichtung 3 weist wiederum eine Trägerplatte 12 auf. Hier kommen jedoch andersartige Führungs- und/oder Positioniermittel zum Einsatz, um die Zuführeinrichtung 3 in eine exakt definierte Montageendposition allein durch Verschieben zu bringen.

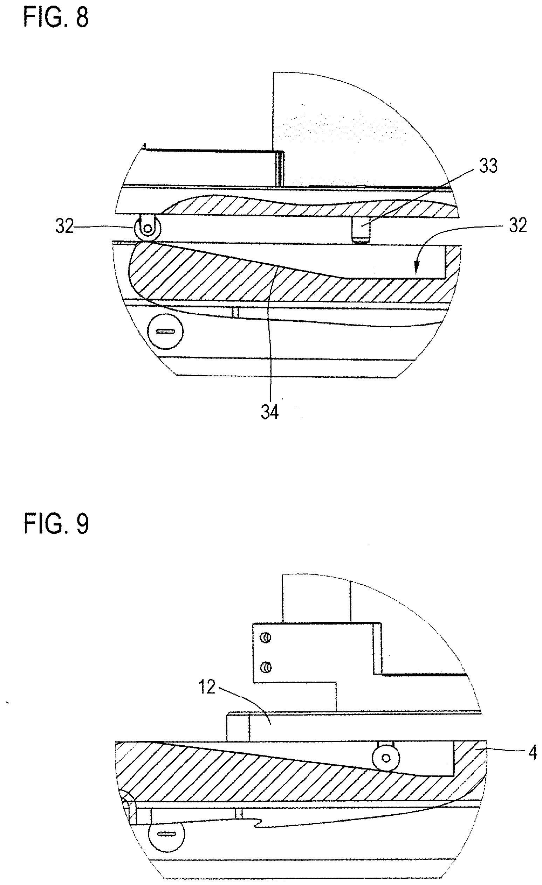

Wie der Aufsicht auf die Montageplatte 4 gemäß Fig. 7 zu entnehmen ist, sind im gezeigten Ausführungsbeispiel an der Montageplatte 4 mehrere, hier vier, Laufnuten 30 ausgebildet, die, siehe Fig. 8, rampenartig nach unten abfallen. Zwischen jeweils zwei benachbarten Laufnuten 30 befinden sich weitere Positioniermittel in Form zweier Zentrieraufnahmen 31, die hier als V-förmig zulaufende Nuten ausgeführt sind.

An der Unterseite der Trägerplatte 12 befinden sich insgesamt vier Rollen 32 sowie zwei der Zentrierung dienende Zapfen 33. Zur Positionierung wird nun die Zuführeinrichtung 3 mit den Rollen 32 auf die Montageplatte 4 aufgesetzt und mit den Rollen an die Laufnuten 30 herangeschoben. Bei weiterer Verschiebebewegung laufen die Rollen 32 in die Laufnuten 30 ein, das heißt, sie laufen entlang der abfallenden Rampen 34 nach unten. Gleichzeitig werden die beiden Zapfen 33 in die Zentrieraufnahmen 31 eingeführt und bewegen sich ebenfalls in Richtung des Grundes der V-förmigen Zentrieraufnahme. Mit weiterer Verschiebebewegung laufen die Rollen 32 immer weiter in die Laufnuten 30 ein, bis die Trägerplatte 12 auf der Montageplatte 4 aufliegt, siehe die die Montageendposition zeigende Fig. 9. Die Zapfen 33 befinden sich dann exakt in Anschlag an den Enden der Zentriernuten 31. Auch bei dieser Erfindungsausgestaltung kann folglich durch eine einfache linerare Verschiebebewegung eine exakte axiale wie auch seitliche Positionierung der Zuführeinrichtung 3 erfolgen, die sodann über die hier nicht näher gezeigten Halteschrauben, die in die Gewindebohrungen 18 an der Montageplatte 4 einzuschrauben sind, fixiert wird.

Wenngleich Fig. 7 nur vier Laufnuten 30 zeigt, ist es selbstverständlich auch denkbar, für einen spiegelbildlichen Aufbau noch zwei weitere Laufnuten 30 am anderen Plattenrand vorzusehen. Das heißt, dass auch in diesem Fall eine spiegelbildliche Ausgestaltung gegeben ist, so dass auch spiegelbildlich aufgebaute Zuführeinrichtungen 3 entweder links- oder rechtsseitig aufgesetzt werden können und Zentrieraufnahmen 31 vorzusehen. In jedem Fall werden jedoch die beiden mittleren Laufnuten 30 genutzt.

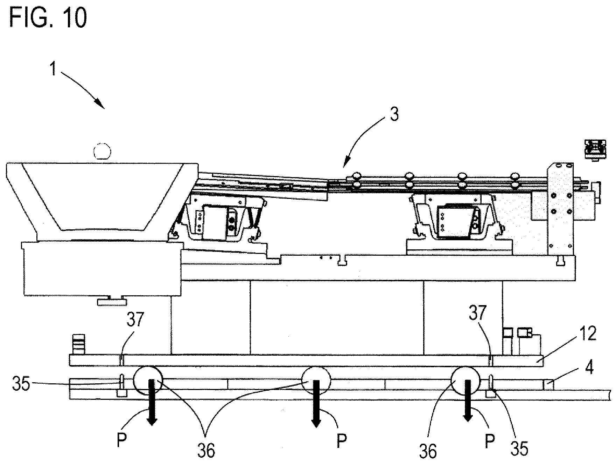

Fig. 10 zeigt schließlich eine weitere Ausführungsform einer erfindungsgemäßen Fertigungs- und/oder Montagevorrichtung 1, wiederum nur in einer Detailansicht. Gezeigt ist wiederum eine Montageplatte 4, die an einem hier nicht näher gezeigten Vorrichtungsgestell angeordnet ist. An der Montageplatte 4 ragen im gezeigten Beispiel mehrere Zapfen 35, die der Zentrierung dienen, nach oben ab. Weiterhin sind an der Montageplatte 4 mehrere Rollen 36 vorgesehen, die, wie die Pfeile P zeigen, vertikal anheb- und absenkbar sind. In Fig. 10 sind die Rollen 36 angehoben dargestellt.

Die Zuführeinrichtung 3 weist auch hier eine Trägerplatte 12 auf, an der zum einen mehrere Zentrieraufnahmen 37 vorgesehen sind, die hier als einfache Bohrungen ausgeführt sind und die mit den Zapfen 35 zusammenwirken. Ferner sind, nicht näher gezeigt, Laufnuten vorgesehen, in die die Rollen 36 eingreifen.

Zur Montage wird die Zuführeinrichtung 3 mit der Trägerplatte 12 auf die Rollen 36 aufgesetzt, so dass diese in die trägerplattenunterseitigen Laufnuten eingreifen. Mit Verschieben der Zuführeinrichtung 3 auf den Rollen 36 wird die Zuführeinrichtung 3 bis gegen einen hier nicht näher gezeigten Anschlag bewegt, so dass eine axiale Ausrichtung und damit ein Erreichen der axialen Endposition gegeben ist. Sodann werden die Rollen 36 abgesenkt, was mechanisch oder hydraulisch oder pneumatisch gesteuert erfolgen kann. Hierbei wird die Zuführeinrichtung 3 ebenfalls abgesenkt, die Trägerplatte 12 bewegt sich in Richtung der Montageplatte 4. Hierbei greifen die Zapfen 35 in die Zentrieraufnahme 37 ein, so dass eine exakte Positionierung und in jeder Richtung bestliegende Montage über diese Positioniermittel erreicht wird. Anschließend erfolgt wiederum das Verschrauben über nicht näher gezeigte Halteschrauben.

Wenngleich nicht zu jeder Ausführungsform beschrieben, sind selbstverständlich jeweils entsprechende Positionserfassungssensoren vorgesehen, die die exakte Endlage sensieren und an die übrigen Steuerungseinrichtungen melden, so dass ein sicherer Betrieb nur dann erfolgt, wenn eben eine exakte Positionierung der Zuführeinrichtung 3 gegeben ist.

## Patentansprüche

1. Fertigungs- und/oder Montagevorrichtung, insbesondere Blisterbefüllvorrichtung, umfassend wenigstens eine an einem Vorrichtungsgestell angeordnete und bei Bedarf austauschbare Zuführeinrichtung für zu verarbeitende Bauteile, die mittels der Zuführeinrichtung vereinzelt in den Arbeitsbereich eines Arbeitsmoduls bringbar sind, wobei die Zuführeinrichtung (3) auf einer Trägerplatte (12) angeordnet ist, wobei am Vorrichtungsgestell (2) eine Montageplatte (4) vorgesehen ist, auf der die Trägerplatte (12) in der Montageendposition aufsitzt, wobei an der Trägerplatte (12) und/oder der Montageplatte (4) Führungs- und/oder Positionierungsmittel (6, 8, 16, 25, 27, 30, 31, 32, 33, 35, 36, 37) derart vorgesehen sind, dass eine zu montierende Zuführeinrichtung (3) durch Verschieben der Trägerplatte (12) auf der Montageplatte (4) in die definierte Montageendposition bringbar ist, **dadurch gekennzeichnet, dass** die Führungs- und/oder Positioniermittel an der Montageplatte (4) angeordnete Rollen (32, 36), die in einer oder mehreren Laufnuten (30) oder auf einer oder mehreren Laufschienen an der Trägerplatte (12) laufen, oder umgekehrt, umfassen, wobei am Vorrichtungsgestell (2) oder der Montageplatte (4) wenigstens ein Positionssensor (23) zur Erfassung des Erreichens der Montageendposition der Trägerplatte (12) vorgesehen ist, wobei der Betrieb der Zuführeinrichtung in Abhängigkeit der Sensorerfassung gesteuert wird.

2. Fertigungs- und/oder Montagevorrichtung nach Anspruch 1, **dadurch gekennzeichnet, dass** die Führungs- und/oder Positioniermittel wenigstens eine an der Montageplatte (4) vorgesehene Führungsleiste (6) und eine an der Trägerplatte (12) vorgesehene Führungsnut (16), in die beim Verschieben die Führungsleiste (6) eingreift, oder umgekehrt, umfassen.

3. Fertigungs- und/oder Montagevorrichtung nach Anspruch 1 oder 2, **dadurch gekennzeichnet, dass** die Führungs- und/oder Positioniermittel wenigstens eine an der Montageplatte (4) oder der Trägerplatte (12) angeordnete Gleitschiene (8), auf denen die jeweils andere Platte gleitet, umfassen.

4. Fertigungs- und/oder Montagevorrichtung nach Anspruch 2 und 3, **dadurch gekennzeichnet, dass** die Führungsleiste (6) oder die Führungsnut (16) plattenmittig und die Gleitschienen (8), vorzugsweise jeweils zwei, an beiden Seiten davon an der Montageplatte (4) oder der Trägerplatte (12) angeordnet sind.

5. Fertigungs- und/oder Montagevorrichtung nacheinem der vorangehenden Ansprüche, **dadurch gekennzeichnet, dass** die Führungs- und/oder Positioniermittel wenigstens eine an der Montageplatte (4) oder der Trägerplatte (12) angeordnete Gleitschiene, auf denen die jeweils andere Platte gleitet, umfassen.

6. Fertigungs- und/oder Montagevorrichtung nach Anspruch 5, **dadurch gekennzeichnet, dass** die Rollen (32, 36) oder die Laufschiene oder Laufnut (30) plattenmittig und die Gleitschienen, vorzugsweise jeweils zwei, an beiden Seiten davon an der Montageplatte (4) angeordnet sind.

7. Fertigungs- und/oder Montagevorrichtung nach einem der vorangehenden Ansprüche, **dadurch gekennzeichnet, dass** die Führungs- und/oder Positioniermittel wenigstens eine an der Trägerplatte (12) vorgesehene Zentrierungsaufnahme (26, 31, 37) und wenigstens ein am Vorrichtungsgestell oder der Montageplatte (4) vorgesehenes Zentrierungsteil (27, 33, 35), das kurz vor Erreichen der Montageendstellung in die Zentrierungsaufnahme (26, 31, 37) eingreift, oder umgekehrt, umfassen.

8. Fertigungs- und/oder Montagevorrichtung nach Anspruch 7, **dadurch gekennzeichnet, dass** die Zentrierungsaufnahme (26, 31) eine an oder im Bereich der vorlaufenden Kante der Trägerplatte (12) oder an der Montageplatte (4) vorgesehene, vorzugsweise V-förmige, Zentriernut ist, in die das Zentrierungsteil in Form eines Zapfens (27, 33) oder einer Passfeder beim Heranschieben oder Absenken eingreift.

9. Fertigungs- und/oder Montagevorrichtung nach einem der vorangehenden Ansprüche, **dadurch gekennzeichnet, dass** am Vorrichtungsgestell oder der Montageplatte (4) wenigstens zwei Spannmittel (11) vorgesehen sind, die in der Montageendstellung an der Trägerplatte (12) oder daran vorgesehenen Spannmitteln (19) zum Verspannen der Trägerplatte zusammenwirken, oder umgekehrt.

10. Fertigungs- und/oder Montagevorrichtung nach Anspruch 9, **dadurch gekennzeichnet, dass** die Spannmittel (11) manuell zu betätigende Spannhebel (20) oder elektromotorisch zu betätigende Spanner sind.

11. Fertigungs- und/oder Montagevorrichtung nach einem der vorangehenden Ansprüche, **dadurch gekennzeichnet, dass** in der Montageplatte (4) mehrere, vorzugsweise mindestens vier, Gewindebohrungen (18) zur Aufnahme von der Fixierung der Trägerplatte (12) dienenden Halteschrauben (17), die durch Durchbrechungen in der Trägerplatte greifen, vorgesehen sind.

12. Fertigungs- und/oder Montagevorrichtung nach einem der vorangehenden Ansprüche, **dadurch gekennzeichnet, dass** an der Zuführeinrichtung (3) wenigstens ein Stecker vorgesehen ist, der in eine am Vorrichtungsgestell (2) oder der Montageplatte (4) vorgesehene Buchse zur Erwirkung einer Verbindung elektrischer und/oder pneumatischer und/oder hydraulischer Versorgungs- oder Steuerleitungen vorgesehen ist.

13. Fertigungs- und/oder Montagevorrichtung nach einem der vorangehenden Ansprüche, **dadurch gekennzeichnet, dass** für eine Vertikalbewegung der Trägerplatte (12) relativ zur Montageplatte (4) die Rollen (36) anhebbar und absenkbar sind, oder dass die Laufnuten (30) oder Laufschienen ansteigend oder abfallen verlaufen.

14. Fertigungs- und/oder Montagevorrichtung nach einem der vorangehenden Ansprüche, **dadurch gekennzeichnet, dass** eine Einrichtung zur Erfassung einer die in der Montageendposition befindliche Zuführeinrichtung (3) identifizierenden Kodierung vorgesehen ist, wobei nach erfolgter Identifizierung seitens einer den Betrieb der Zuführeinrichtung und/oder des Arbeitsmoduls steuernden Steuerungseinrichtung automatisch ein der identifizierten Zuführeinrichtung zugeordnetes Arbeitsprogramm abgearbeitet wird.

## Claims

1. Production and/or assembly device, in particular blister filling device, comprising at least one infeed installation for components to be processed, said infeed installation being disposed on a device frame and being replaceable when required, said components by means of the infeed installation being capable of being brought in a singularized manner into the operating region of an operating module, wherein the infeed installation (3) is disposed on a support plate (12), wherein an assembly plate (4) on which the support plate (12) sits in the final assembly position is provided on the device frame (2), wherein guiding and/or positioning means (6, 8, 16, 25, 27, 30, 31, 32, 33, 35, 36, 37) are provided on the support plate (12) and/or the assembly plate (4) in such a manner that an infeed installation (3) that is to be assembled is capable of being moved to the defined final assembly position by displacing the support plate (12) on the assembly plate (4), **characterized in that** the guiding and/or positioning means comprise rollers (32, 36) that are disposed on the assembly plate (4) and run in one or a plurality of running grooves (30) or on one or a plurality of running rails on the support plate (12), or vice versa, wherein at least one position sensor (23) for detecting the attainment of the final assembly position of the support plate (12) is provided on the device frame (2) or on the assembly plate (4), wherein the operation of the infeed installation is controlled in a manner dependent on the sensor detection.

2. Production and/or assembly device according to Claim 1, **characterized in that** the guiding and/or positioning means comprise at least one guide strip (6) which is provided on the assembly plate (4), and a guide groove (16) which is provided on the support plate (12) and in which the guide strip (6) engages during the displacement, or vice versa.

3. Production and/or assembly device according to Claim 1 or 2, **characterized in that** the guiding and/or positioning means comprise at least one sliding rail (8) which is disposed on the assembly plate (4) or the support plate (12), on which sliding rails the respective other plate slides.

4. Production and/or assembly device according to Claims 2 and 3, **characterized in that** the guide strip (6) or the guide groove (16) is disposed so as to be centric in the plate, and the preferably in each case two sliding rails (8) are disposed on either side of the guide strip (6) or the guide groove (16) on the assembly plate (4) or the support plate (12).

5. Production and/or assembly device according to one of the preceding claims, **characterized in that** the guiding and/or positioning means comprise at least one sliding rail which is disposed on the assembly plate (4) or the support plate (12), on which sliding rails the respective other plate slides.

6. Production and/assembly device according to Claim 5, **characterized in that** the rollers (32, 36), or the running rail, or the running groove (30) are/is disposed so as to be centric in the plate, and the preferably in each case two sliding rails are disposed on either side of the rollers (32, 36) or the running rail or the running groove (30) on the assembly plate (4).

7. Production and/or assembly device according to one of the preceding claims, **characterized in that** the guiding and/or positioning means comprise at least one centring receptacle (26, 31, 37) that is provided on the support plate (12), and at least one centring part (27, 33, 35) that is provided on the device frame or on the assembly plate (4), said centring part (27, 33, 35) shortly before attaining the final assembly position engaging in the centring receptacle (26, 31, 37), or vice versa.

8. Production and/or assembly device according to Claim 7, **characterized in that** the centring receptacle (26, 31) is a preferably V-shaped centring groove which is provided on or in the region of the leading edge of the support plate (12) or on the assembly plate (4) and in which the centring part in the form of a pin (27, 33) or of a feather key engages during the sliding approach or during the lowering.

9. Production and/or assembly device according to one of the preceding claims, **characterized in that** at least two tensioning means (11) are provided on the device frame or the assembly plate (4), said tensioning means (11) in the final assembly position interacting on the support plate (12) or tensioning means (19) provided thereon, in order to tension the support plate, or vice versa.

10. Production and/or assembly device according to Claim 9, **characterized in that** the tensioning means (11) are tensioning levers (20) to be manually activated, or tensioners that are to be electromotively activated.

11. Production and/or assembly device according to one of the preceding claims, **characterized in that** a plurality of, preferably at least four, threaded bores (18) for receiving holding screws (17) which serve for fixing the support plate (12) are provided in the assembly plate (4), said holding screws engaging through holes in the support plate.

12. Production and/or assembly device according to one of the preceding claims, **characterized in that** at least one plug is provided on the infeed installation (3), said plug being provided in a socket for effecting a connection between electrical and/or pneumatic and/or hydraulic supply or control lines, said socket being provided on the device frame (2) or the assembly plate (4).

13. Production and/or assembly device according to one of the preceding claims, **characterized in that** the rollers (36) are capable of being raised and lowered for a vertical movement of the support plate (12) relative to the assembly plate (4), or **in that** the running grooves (30) or the running rails run in an ascending or descending manner.

14. Production and/or assembly device according to one of the preceding claims, **characterized in that** an installation for detecting a coding that identifies the infeed installation (3) located in the final assembly position is provided, wherein once the identification has been performed by a control installation that controls the operation of the infeed installation and/or of the operating module, an operating programme that is assigned to the infeed installation identified is automatically executed.

## Revendications

1. Dispositif de fabrication et/ou de montage, en particulier dispositif de remplissage de blisters, comprenant au moins un moyen d'introduction disposé sur un bâti de dispositif et pouvant être remplacé en cas de nécessité pour des composants à traiter pouvant être montés au moyen du dispositif d'introduction de manière isolée dans la zone de travail d'un module de travail, dans lequel le dispositif d'introduction (3) est disposé sur une plaque de support (12), dans lequel il est prévu sur le bâti de dispositif (2) une plaque de montage (4) sur laquelle repose la plaque de support (12) en position de fin de montage, dans lequel des moyens de guidage et/ou de positionnement (6, 8, 16, 25, 27, 30, 31, 32, 33, 35, 36, 37) sont prévus sur la plaque de support (12) et/ou sur la plaque de montage (4) de manière à ce qu'un dispositif d'introduction (3) devant être monté puisse être amené à la position de fin de montage définie par coulissement de la plaque de support (12) sur la plaque de montage (4), **caractérisé en ce que** les moyens de guidage et/ou de positionnement comprennent des rouleaux (32, 36) disposés sur la plaque de montage (4), qui s'étendent dans une ou plusieurs rainures de coulissement (30) ou sur un ou plusieurs rails de coulissement sur la plaque de support (12), ou inversement, dans lequel il est prévu au moins un capteur de position (23) sur le bâti de dispositif (3) ou sur la plaque de montage (4) pour détecter le fait que la position de fin de montage de la plaque de montage (12) a été atteinte, dans lequel le fonctionnement du dispositif d'introduction est commandé en fonction de la détection effectuée par le capteur.

2. Dispositif de fabrication et/ou de montage selon la revendication 4, **caractérisé en ce que** les moyens de guidage et/ou de positionnement comprennent au moins une barre de guidage (6) prévue sur la plaque de montage (4) et une rainure de guidage (16) prévue sur la plaque de support (12), dans laquelle s'engage la barre de guidage (6) lors de son coulissement, ou inversement.

3. Dispositif de fabrication et/ou de montage selon la revendication 1 ou 2, **caractérisé en ce que** les moyens de guidage et/ou de positionnement comprennent au moins une glissière (8) disposée sur la plaque de montage (3) ou sur la plaque de support (12), sur laquelle coulisse l'autre plaque respective.

4. Dispositif de fabrication et/ou de montage selon les revendications 2 et 3, **caractérisé en ce que** la barre de guidage (6) ou la rainure de guidage (16) sont disposées au centre de la plaque et **en ce que** les glissières (8), de préférence deux d'entre elles, sont disposées, au niveau de leurs deux côtés, sur la plaque de montage (4) ou sur la plaque de support (12).

5. Dispositif de fabrication et/ou de montage selon l'une des revendications précédentes, **caractérisé en ce que** les moyens de guidage et/ou de positionnement comprennent au moins une glissière disposée sur la plaque de montage (4) ou sur la plaque de support (12), sur laquelle coulisse l'autre plaque respective.

6. Dispositif de fabrication et/ou de montage selon la revendication 5, **caractérisé en ce que** les rouleaux (32, 36) ou la glissière ou la rainure de coulissement (30) sont disposées au centre des plaques et **en ce que** les glissières, de préférence deux d'entre elles, sont disposées, au niveau de leurs deux côtés, sur la plaque de montage (4).

7. Dispositif de fabrication et/ou de montage selon l'une des revendications précédentes, **caractérisé en ce que** les moyens de guidage et/ou de positionnement comprennent au moins un évidement de centrage (26, 31, 37) prévu sur la plaque de support (12) et au moins une pièce de centrage (27, 33, 35) prévue sur le bâti de dispositif ou sur la plaque de montage (4), qui s'engage dans l'évidement de centrage (26, 31, 37), ou inversement, peu avant d'avoir atteint la position de fin de montage.

8. Dispositif de fabrication et/ou de montage selon la revendication 7, **caractérisé en ce que** l'évidement de centrage (26, 31) est une rainure de centrage, de préférence en forme de V, prévue sur ou dans la zone du bord avant de la plaque de support (12) ou sur la plaque de montage (4), dans laquelle s'engage la pièce de centrage sous la forme d'un tenon (27, 33) ou d'une clavette lors de son coulissement ou de son abaissement.

9. Dispositif de fabrication et/ou de montage selon l'une des revendications précédentes, **caractérisé en ce qu'**il est prévu sur le bâti de dispositif ou sur la plaque de montage (4) au moins deux moyens de serrage (11) qui coopèrent à la position de fin de montage sur la plaque de support (12) ou sur des moyens de serrage (19) qui y sont prévus, pour serrer la plaque de support, ou inversement.

10. Dispositif de fabrication et/ou de montage selon la revendication 9, **caractérisé en ce que** les moyens de serrage (11) sont un levier de serrage (20) devant être actionné manuellement ou des pinces devant être actionnées par moteur électrique.

11. Dispositif de fabrication et/ou de montage selon l'une des revendications précédentes, **caractérisé en ce qu'**il est prévu dans la plaque de montage (4) plusieurs orifices taraudés (18), de préférence au moins quatre d'entre eux, destinés à recevoir des vis de maintien (17) servant à fixer la plaque de support (12), qui s'engagent dans des traversées ménagées dans la plaque de support.

12. Dispositif de fabrication et/ou de montage selon l'une des revendications précédentes, **caractérisé en ce qu'**il est prévu sur le dispositif d'introduction (3) au moins une fiche qui est prévue dans une douille disposée sur le bâti de dispositif (2) ou sur la plaque de montage (4) pour provoquer un raccordement de lignes d'alimentation ou de commande électriques et/ou pneumatiques et/ou hydrauliques.

13. Dispositif de fabrication et/ou de montage selon l'une des revendications précédentes, **caractérisé en ce que**, pour un mouvement vertical de la plaque de support (12) par rapport à la plaque de montage (4), les rouleaux (36) peuvent être soulevés et abaissés, et ou **en ce que** les rainures de coulissement (30) ou les glissières s'étendent de manière à monter ou à descendre.

14. Dispositif de fabrication et/ou de montage selon l'une des revendications précédentes, **caractérisé en ce qu'**il est prévu un dispositif destiné à détecter un codage identifiant le dispositif d'introduction (3) en position de fin de montage, dans lequel, une fois que l'identification a été réussie du côté d'un dispositif de commande commandant le fonctionnement du dispositif d'introduction et/ou du module de travail, un programme de travail associé au dispositif d'introduction identifié est exécuté automatiquement.
